# EUROPÄISCHE PATENTSCHRIFT

(11) **EP 0 659 250 B1**
(45) Veröffentlichungstag und Bekanntmachung des Hinweises auf die Patenterteilung: **10.07.1996**
(21) Anmeldenummer: 93919292.8
(22) Anmeldetag: 08.09.1993
(51) Int. Cl.: F16H 61/06

(54) **LASTSCHALTBARES GETRIEBE, INSBESONDERE ZWEIGANG-PLANETENGETRIEBE**
POWERSHIFT GEAR BOX, IN PARTICULAR TWO-SPEED EPICYCLIC GEAR BOX
BOITE DE VITESSES COUPLABLE SOUS CHARGE, NOTAMMENT BOITE PLANETAIRE A DEUX VITESSES

(30) Priorität: 12.09.1992 DE 4230622
(43) Veröffentlichungstag der Anmeldung: 28.06.1995
(73) Patentinhaber: ZF FRIEDRICHSHAFEN Aktiengesellschaft, D-88038 Friedrichshafen (DE)
(72) Erfinder: LEGNER, Jürgen, D-88048 Friedrichshafen (DE)
(86) Internationale Anmeldenummer: EP9302421
(87) Internationale Veröffentlichungsnummer: WO9407060

(56) Entgegenhaltungen:
- WO-A-89/08796
- FR-A- 2 308 025
- US-A- 4 219 109
- US-A- 5 105 922

## Beschreibung

Die Erfindung bezieht sich auf ein lastschaltbares Getriebe, insbesondere ein Zweigang-Getriebe, das vorzugsweise als Planetengetriebe ausgebildet ist. Die Gangstufen dieses Getriebes sind durch hydraulisch betätigbare Reibungskupplungen zu schalten. Die Reibelemente (Innen- und Außenlamellen) der Reibungskupplungen werden durch Federkraft geschlossen und durch Öldruck geöffnet.

Aus der WO-A-89/08796 ist ein lastschaltbares Planetengetriebe mit zwei Gängen bekannt. Beim Schalten der Gänge werden Reibungskupplungen (eine dieser Reibungskupplungen wirkt als Bremse) wechselweise geöffnet und geschlossen. Das Schließen der Reibungskupplungen erfolgt über Tellerfedern. Sind beide Reibungskupplungen geschlossen, ist der An- und Abtrieb blockiert (Parkbremse).

Weil die wirksamen Federkräfte hoch sind, wird das Druckmedium aus den jeweiligen Druckräumen in sehr kurzer Zeit zum Tank abgeführt. Hierdurch kann es, insbesondere bei Rückschaltungen, zu großen Verzögerungen ("Interlock") kommen.

Durch den Einbau von Rückschlagventilen mit parallel geschalteten Drosseln in den zu den Druckräumen führenden Leitungen kann sichergestellt werden, daß das wechselweise Öffnen und Schließen der Reibungskupplungen derart abgestimmt erfolgt, daß die zu schließende Reibungskupplung erst dann geschlossen wird, wenn die zu öffnende Reibungskupplung geöffnet ist.

Die um die Drosseln ergänzten Rückschlagventile sind so angeordnet, daß der Ölstrom beim Öffnen ungehindert in den jeweiligen Druckraum fließen kann. Beim Schließen wird der aus dem Druckraum verdrängte Ölstrom gedrosselt in den Tank abgeführt.

Mit den erwähnten Ventilen kann der Zeitpunkt des Schließens beeinflußt werden. Der Schließvorgang selbst, d. h. die zeitliche Drehmomentaufnahme der Reibungskupplung, kann dadurch nicht beeinflußt werden. Sobald der auf die Reibelemente im Sinne eines Schließens einwirkende Kolben das Lüftspiel (Summe der Abstände der Innen- und Außenlamellen einer Reibungskupplung im geöffneten Zustand) überwunden hat, steigt das von den Reibelementen übertragbare Drehmoment schlagartig auf den Maximalwert an. Da der Schließvorgang sehr kurzzeitig erfolgt, macht sich dies, insbesondere bei einer Rückschaltung vom zweiten in den ersten Gang, in einer harten Schaltung bemerkbar, die als besonders unangenehm empfunden wird.

Der vorliegenden Erfindung liegt die Aufgabe zugrunde, große Verzögerungen insbesondere bei Rückschaltungen zu vermeiden und so die Schaltqualität zu verbessern.

Diese Aufgabe wird mit einem, auch die kennzeichnenden Merkmale des Hauptanspruches aufweisenden, gattungsgemäßen lastschaltbaren Planetengetriebes gelöst.

Zwar ist aus der US-A-4 219 109 der Einsatz eines Speichers zur Beeinflussung des Schaltverhaltens einer Reibungskupplung bekannt. Es handelt sich hier aber um die Beeinflussung des Schließverhaltens einer druckbetätigten Kupplung.

Bei der erfindungsgemäßen Anordnung wird das im Speicher zwischengespeicherte Druckmittelvolumen beim Schließen der Reibungskupplung über die Drosselstelle entleert. Das Entleeren beginnt dann, wenn die Reibelemente der Reibungskupplung zur Anlage gelangen, d. h. das Lüftspiel zu Null geworden ist. Der Schließvorgang kann zusätzlich durch die Art und Größe (Speichervolumen) des Speichers beeinflußt werden.

Es ist vorteilhaft, wenn der Kolben bei vollständig geschlossener Reibungskupplung, bei dem das maximal übertragbare Drehmoment anliegt, eine Endlage erreicht. Die Endlage kann beispielsweise durch einen Anschlag realisiert sein.

Um die Schaltübergänge bei einem Rückschalten weicher zu gestalten, ist der Speicher derjenigen Reibungskupplung zugeordnet, die bei geschaltetem höheren Gang geöffnet ist.

Weitere, für die Erfindung wesentliche Merkmale und die daraus resultierenden Vorteile sind der nachfolgenden Beschreibung eines Ausführungsbeispiels zu entnehmen.

Es zeigt:
- Fig. 1: einen Querschnitt durch ein lastschaltbares Getriebe in schematischer Darstellung sowie die zur Schaltung des Getriebes erforderlichen Elemente;
- Fig. 2: das lastschaltbare Getriebe nach Fig. 1 in einer weiteren Schaltstellung;
- Fig. 3: ein Diagramm, das den Druckverlauf über der Zeit bei einer Rückschaltung wiedergibt und
- Fig. 4: ein Diagramm, das den Drehmomentenverlauf bei einer Rückschaltung darstellt.

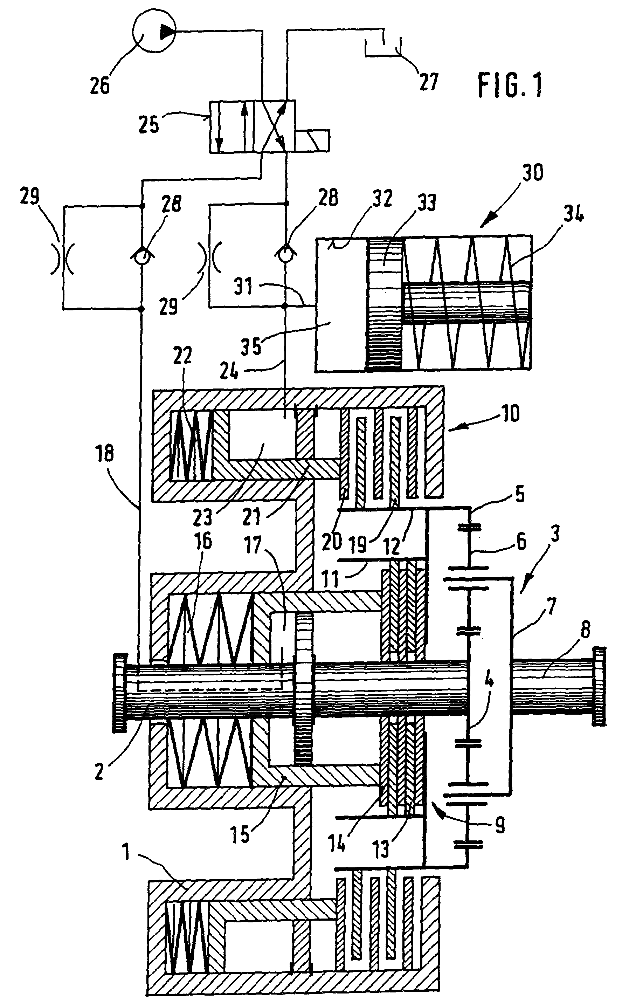

Bei dem in Fig. 1 schematisch im Querschnitt dargestellten Getriebe handelt es sich um ein hydraulisch lastschaltbares Zweigang-Getriebe. In einem Gehäuse 1 ist eine Antriebswelle 2 drehbar gelagert. Die Antriebswelle 2 wird von einem selbst nicht dargestellten Antriebsmotor angetrieben. Hierbei kann es sich beispielsweise um einen stufenlos verstellbaren Hydraulikmotor oder einen Elektromotor handeln. Das hydraulisch lastschaltbare Getriebe ist vorzugsweise als Planetengetriebe 3 ausgebildet. Das Planetengetriebe 3 setzt sich im einzelnen aus einem inneren Zentralrad 4, einem äußeren Zentralrad 5, mehreren Planetenrädern 6 und einem Planetenträger 7 zusammen. Die Planetenräder 6 sind auf dem Planetenträger 7 drehbar gelagert, während letzterer drehfest mit einer Abtriebswelle 8 verbunden ist. Die Abtriebswelle 8 kann mit einer selbst nicht dargestellten Stirnradstufe in Antriebsverbindung stehen, über die eine Abtriebswelle zum Antrieb der Räder eines Radladers oder dergleichen angetrieben wird.

Die beiden Gangstufen des lastschaltbaren Getriebes sind über zwei Reibungskupplungen 9 und 10 hydraulisch schaltbar. Hierbei ist die außenliegende Reibungskupplung 10 vorzugsweise zur innenliegenden Reibungskupplung 9 konzentrisch liegend angeordnet und als Bremse ausgeführt. Ungeachtet ihrer Funktion als Bremse wird dieses Bauteil als Reibungskupplung bezeichnet.

Das äußere Zentralrad 5 weist zwei Lamellenträger 11 und 12 auf. Vorzugsweise sind diese Lamellenträger 11 und 12 zusammen mit dem äußeren Zentralrad 5 als einstückiges Bauteil gefertigt.

Der in der Zeichnung innenliegende Lamellenträger 11 nimmt Außenlamellen 13 der Reibungskupplung 9 in bekannter Weise drehfest und axial verschieblich auf. Dazugehörige Innenlamellen 14 sind in bekannter Weise auf der Antriebswelle 2 drehfest und axial beweglich angeordnet.

Im Gehäuse 1 ist ein topfförmig gestalteter Kolben 15 axial beweglich geführt. Dieser Kolben ist durch mehrere Tellerfedern 16 in der Weise belastet, daß er im Schließsinne auf die Außen- und Innenlamellen 13 und 14 der Reibungskupplung 9 verschoben wird. Im Inneren des Kolbens 15 befindet sich ein Druckraum 17, zu dem eine erste Leitung 18 führt, durch die Druckmittel, z. B. Öl, zu- oder abgeführt wird.

Aus dem bisher Gesagten folgt, daß die Reibungskupplung 9 bei drucklosem Druckraum 17 durch die Kraft der Tellerfedern 16, die den Kolben 15 belastet und - bezogen auf die Zeichnung - nach rechts verschiebt, geschlossen wird. Wird hingegen der Druckraum 17 mit Druckmittel beaufschlagt, wird die Reibungskupplung 9 gegen die Kraft der Tellerfedern 16 geöffnet, d. h. der Kolben 15 bewegt sich - bezogen auf die Zeichnung - nach links.

Die Reibelemente der Reibungskupplung 10 bestehen aus Innenlamellen 19, die auf dem Lamellenträger 12 des äußeren Zentralrads 5 gehaltert sind und Außenlamellen 20, die im Gehäuse 1 in bekannter Weise angeordnet sind. Zum Öffnen und Schließen der Reibungskupplung 10 ist ein weiterer Kolben 21 vorgesehen, der axial gleitend im Gehäuse 1 geführt ist und auf den eine durch Tellerfedern 22 ausgeübte Kraft wirkt. Eine Leitung 24 führt zu einem Druckraum 23.

Wie aus der Zeichnung ersichtlich, befindet sich die Reibungskupplung 9 im geschlossenen Zustand, während die Reibungskupplung 10 geöffnet ist. Es ist der zweite Gang geschaltet. Das Drehmoment der Antriebswelle wird zum einen über die geschlossene Reibungskupplung 9 und das äußere Zentralrad 5 auf die Planetenräder 6 und zum anderen über das innere Zentralrad 4 auf die Planetenräder 6 geleitet. Der Planetenradträger 7 überträgt dann die summierte Leistung auf die Abtriebswelle 8.

Die Leitungen 18 und 24 sind über ein Schaltventil 25, das als 4/2-Wegeventil ausgebildet ist, entweder mit einer Pumpe 26 oder mit einem Tank 27 verbindbar. In die Leitungen 18 und 24 ist, zwischen dem Schaltventil 25 und den Druckräumen 17 und 23, jeweils ein Rückschlagventil 28 eingeschaltet, zu dem jeweils eine Drossel 29 parallel geschaltet ist. Die Rückschlagventile 28 erlauben ein ungehindertes Beaufschlagen der Druckräume 17 und 23 mit Drucköl, während der Rücklauf des Ölstroms aus den Druckräumen 17 bzw. 23 zum Tank 27 gedrosselt ist.

An die Leitung 24, die die Rücklaufleitung darstellt, wenn die Reibungskupplung 10 geschlossen wird, um den ersten Gang zu schalten, ist ein Speicher 30 mit Hilfe einer Anschlußleitung 31 angeschlossen.

Der Speicher 30 besteht prinzipiell aus einem Zylinder 32, in dem ein Kolben 33 axial verschieblich geführt ist. Der Kolben 33 ist beispielsweise durch eine Schraubendruckfeder 34 federbelastet. Wenn, wie in der Zeichnung dargestellt, der zweite Gang geschaltet ist, ist der Druckraum 23 mit Druckmittel gefüllt. Die Reibungskupplung 10 ist geöffnet. Gleichzeitig ist das Speichervolumen 35 des Speichers 30 mit Druckmittel gefüllt. Der Kolben 33 befindet sich - federbelastet - in der gezeichneten rechten Endlage.

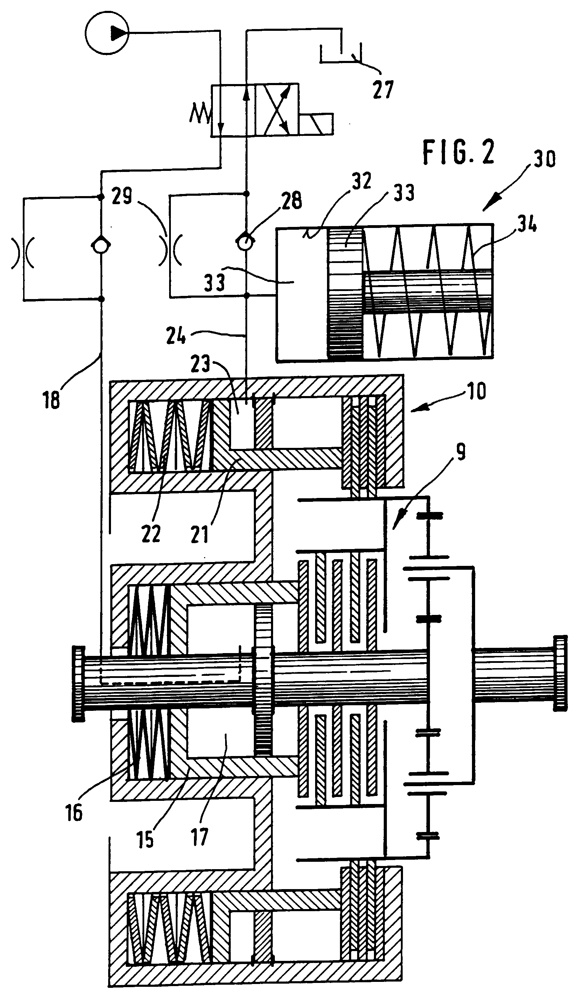

Bei einer Rückschaltung vom zweiten in den ersten Gang wechselt das Schaltventil 25 seine Schaltstellung und nimmt die in Fig. 2 eingezeichnete Schaltposition ein. Die Leitung 18 ist mit der Pumpe 26 verbunden, während die Leitung 24 über die Drossel 29 - unter Umgehung des Rückschlagventils 28 - zum Tank 27 führt. Beim Rückschalten wird der Druckraum 17 mit Druckmittel gefüllt. Der Kolben 15 bewegt sich gegen die Kraft der Tellerfedern 16 nach links. Die Reibungskupplung 9 wird geöffnet.

Das im Druckraum 23 eingeschlossene Druckmittel fließt über die Drossel 29 zum Tank 27 ab. Der Kolben 21 beginnt sich durch die Kraft der Tellerfedern 22 nach rechts zu bewegen. Die Reibelemente (Innen- und Außenlamellen 19 und 20) der Reibungskupplung 10 beginnen sich einander zu nähern, bis das Lüftspiel immer kleiner wird und schließlich den Wert Null annimmt. Dieser Schaltzustand ist in Fig. 2 dargestellt. Um zu verhindern, daß die Reibungskupplung 10 schlagartig das volle Drehmoment überträgt, wenn das Lüftspiel der Reibelemente auf den Wert von Null reduziert wird, sind die Kennlinie der Schraubendruckfeder 34 des Speichers 30 sowie das Speichervolumen 35 derart ausgelegt, daß der Kolben 21 bei auf den Wert von Null oder nahe Null reduziertem Lüftspiel der Reibelemente der Reibungskupplung 10 zum Stillstand kommt. Die Reibungskupplung 10 wird demnach nicht vollständig geschlossen. Der Speicher 30 übernimmt eine Haltefunktion in der Weise, daß in der Leitung 24 zwischen dem Druckraum 23 und dem Rückschlagventil 28 ein Haltedruck bestehen bleibt. Dieser Haltedruck wird nicht schlagartig, sondern stetig durch den Abfluß des im Speicher 30 eingeschlossenen Drucköls über die Drossel 29 abgebaut. Durch den stetigen Abbau dieses Haltedrucks wird die Reibungskupplung 10 mit einem stetigen Übergang letztlich vollständig geschlossen. In dieser Übergangsphase (Rutschphase der Reibelemente der Reibungskupplung 10) läuft der Kolben 33 unter der Kraft der Schraubendruckfeder 34 nach links, bis das Speichervolumen 35 seinen Minimalwert erreicht hat. In dieser Position, die nicht dargestellt ist, läuft der Kolben 33 gegen einen Endanschlag. Er hat seine Endlage erreicht. In diesem Zeitpunkt ist das unter dem Haltedruck stehende, im Speicher 30 aufgenommene Druckmittel über die Drossel 29 abgeflossen, so daß die Tellerfedern 22 den Kolben 21 in seine endgültige Schließposition überführen.

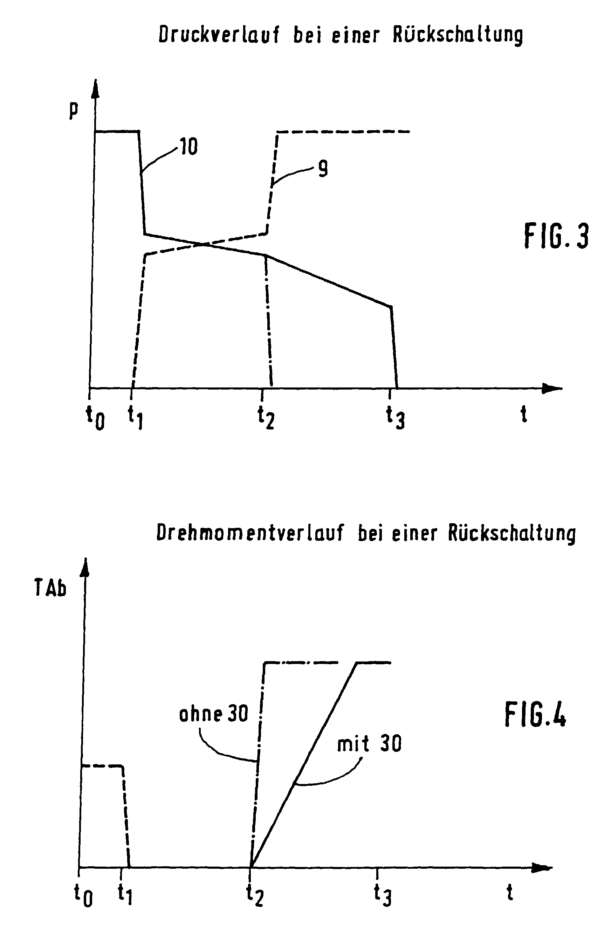

Dem Diagramm nach Fig. 3 sind die Druckverläufe in den Druckräumen 17 (gestrichelte Linie) und 23 (durchgezogene Linie) über der Zeit zu entnehmen. Zum Zeitpunkt tl wird die Rückschaltung eingeleitet. Das Gangventil 25 wird umgeschaltet. Der Kolben 21 verdrängt das im Druckraum 23 eingeschlossene Öl gegen die Drossel 29 bis zum Zeitpunkt t2. Ohne den Speicher 30 würde der Druck sehr schnell auf den Wert Null abfallen, das durch die strichpunktiert eingezeichnete Linie verdeutlicht ist. Der Speicher 30 verhindert einen schnellen Druckabfall. Der Druck im Druckraum 23 wird - je nach Kennlinie der Schraubendruckfeder 34 - nach unten moduliert. Der Druck im Druckraum 22 fällt im Zeitraum t2 bis t3 stetig nach unten ab. Vom Zeitpunkt t3 an fällt der Druck im Druckraum 23 schnell auf Null ab.

Dem Diagramm entsprechend Fig. 4 ist der Drehmomentenverlauf der Rückschaltung zu entnehmen. Die Drehmomentenaufnahme der sich schließenden Reibungskupplung 10 beginnt zum Zeitpunkt t2. Ohne den Speicher würde der Drehmomentenanstieg sehr steil verlaufen, wie dies durch die strichpunktierte Linie dargestellt ist. Durch den Speicher 30 wird der Drehmomentenanstieg abgeflacht. Der Drehmomentenanstieg verläuft im Zeitraum von t2 nach t3 stetig.

Der Schließvorgang kann in mehrfacher Hinsicht beeinflußt werden. Eine zeitliche Veränderung ist durch veränderliche Querschnitte der Drossel 29 möglich. Der Schließvorgang kann durch die Auslegung der Kennlinie der Schraubendruckfeder 34 (selbstverständlich ist die Verwendung einer anderen geeigneten Feder möglich) und durch das Speichervolumen 35 beeinflußt werden.

Die Erfindung kann auch bei rotierenden Reibungskupplungen eingesetzt werden. In diesem Fall ist der Speicher 30, das Rückschlagventil 28 und die Drossel 29 zwischen dem Druckraum 23 des Kolbens 21 und einer Leckagestelle in der Druckmittelzuführung (Kolbenringe) anzuordnen.

### Bezugszeichen

- 1: Gehäuse
- 2: Antriebswelle
- 3: Planetengetriebe
- 4: inneres Zentralrad
- 5: äußeres Zentralrad
- 6: Planetenrad
- 7: Planetenradträger
- 8: Abtriebswelle
- 9: Reibungskupplung
- 10: Reibungskupplung
- 11: Lamellenträger
- 12: Lamellenträger
- 13: Außenlamellen
- 14: Innenlamellen
- 15: Kolben
- 16: Tellerfeder
- 17: Druckraum
- 18: Leitung
- 19: Innenlamellen
- 20: Außenlamellen
- 21: Kolben
- 22: Tellerfeder
- 23: Druckraum
- 24: Leitung
- 25: Schaltventil
- 26: Pumpe
- 27: Tank
- 28: Rückschlagventil
- 29: Drossel
- 30: Speicher
- 31: Anschlußleitung
- 32: Zylinder
- 33: Kolben
- 34: Schraubendruckfeder
- 35: Speichervolumen

## Patentansprüche

1. Lastschaltbares Planetengetriebe (3) mit zwei Gängen, dessen Gangstufen durch hydraulisch schaltbare Reibungskupplungen (9, 10) wechselweise geschaltet werden, wobei Reibelemente (13, 14 bzw. 19, 20) der Reibungskupplungen (9, 10) durch Federkraft (16, 22) geschlossen und durch Öldruck geöffnet werden, wobei zu Druckräumen (17, 23) der Reibungskupplungen (9, 10) Leitungen (18, 24) führen, in die Rückschlagventile (28) mit parallel geschalteten Drosseln (29) eingeschaltet sind, dadurch **gekennzeichnet,** daß an mindestens eine der Leitungen (18) ein Speicher (30) angeschlossen ist, der beim Öffnen der Reibungskupplung (9) mit Druckmittel gefüllt und beim Schließen der Reibungskupplung (9) über die Drosselstelle (29) entleert wird, so daß nach Überwinden des Lüftspieles der Reibelemente (13, 14 bzw. 19, 20) zumindest auf einer der Reibungskupplungen (9 oder 10) nicht die volle Federkraft (16 oder 22) auf die Reibelemente (13, 14 bzw. 19, 20) wirkt.

2. Getriebe nach Anspruch 1, dadurch **gekennzeichnet,** daß der Kolben (33) bei maximal übertragbarem Drehmoment der Reibungskupplung eine Endlage erreicht.

3. Getriebe nach den Ansprüchen 1 und 2, dadurch **gekennzeichnet**, daß der Speicher (30) der Reibungskupplung (9) zugeordnet ist, die geöffnet ist, wenn der höhere Gang geschaltet ist.

## Claims

1. Two-speed power shift planetary gearing (3), the speeds of which are alternately selected by means of hydraulically operable friction clutches (9, 10), friction elements (13, 14 and 19, 20) of the friction clutches (9, 10) being closed by spring force (16, 22) and opened by oil pressure, lines (18, 24), into which check valves (28) with parallel-connected throttles (29) are inserted, leading to pressure chambers (17, 23) of the friction clutches (9, 10), characterized in that connected to at least one of the lines (18) is a receiver (30) which, upon opening of the friction clutch (91), is filled with pressure medium and, upon closing of the friction clutch (9) is emptied via the throttle point (29) so that, after the lifting clearance of the friction elements (13, 14 or 19, 20) has been surmounted, there is not the full spring force (16 or 22) acting upon the friction elements (13, 14 or 19, 20).

2. Gearing according to claim 1, characterized in that the piston (33) at the maximum transmissible torque of the friction clutch reaches an end position.

3. Gearing according to claims 1 and 2, characterized in that the receiver (30) is associated with the friction clutch (9) which is opened when the higher speed is selected.

## Revendications

1. Boîte de vitesses (3) à engrenages planétaires commandées sous charge, à deux vitesses, dont les rapports sont commandés alternativement par des embrayages (9, 10) hydrauliques à friction, dans laquelle les éléments de friction (13, 14; respectivement 19, 20) des embrayages à friction (9, 10) sont verrouillés par la force d'un ressort (16, 22) et déverrouillés par la pression d'huile, dans lequel des conduits (18, 24) connectent des chambres de pression (17, 23) des embrayages à friction (9, 10) à des soupapes anti-retour (28) pourvues d'étranglements (29), couplées en parallèle, caractérisée en ce qu'un réservoir (30) est connecté à au moins un des conduits (18), ce réservoir étant rempli de liquide sous pression lors de l'ouverture de l'embrayage à friction (9) et vidé à travers l'étranglement (29) lors de la fermeture dudit embrayage à friction (9), de telle manière qu'après la compensation du jeu des éléments de friction (13, 14; respectivement 19, 20) la poussée des ressorts (16 ou 22) n'agit pas pleinement sur les éléments de friction (13, 14; respectivement 19, 20) d'au moins un des embrayages à friction (9 ou 10).

2. Boîte de vitesses selon la revendication 1, caractérisée en ce que le piston (33) atteint une position finale lors de la transmission maximale du couple de l'embrayage à friction.

3. Boîte de vitesses selon les revendications 1 et 2, caractérisée en ce que le réservoir (30) est associé à l'embrayage à friction (9), cet embrayage étant déverrouillé lorsque le rapport supérieur est engagé.
